**Europäisches Patentamt**

**European Patent Office**

**Office européen des brevets**

(19)

(11) Numéro de publication : **0 406 073 B1**

(12)

# FASCICULE DE BREVET EUROPEEN

(45) Date de publication du fascicule du brevet :
**05.10.94 Bulletin 94/40**

(51) Int. Cl.⁵ : **H04N 3/02, G02B 26/10**

(21) Numéro de dépôt : **90401772.0**

(22) Date de dépôt : **22.06.90**

(54) **Procédé et dispositif de balayage pour systèmes optiques.**

(30) Priorité : **27.06.89 FR 8908508**

(43) Date de publication de la demande :
**02.01.91 Bulletin 91/01**

(45) Mention de la délivrance du brevet :
**05.10.94 Bulletin 94/40**

(84) Etats contractants désignés :
**DE ES GB IT NL**

(56) Documents cités :
**DE-C- 3 415 062**
**FR-A- 2 450 542**
**US-A- 4 648 685**

(73) Titulaire : **SAT (SOCIETE ANONYME DE TELECOMMUNICATIONS) Société Anonyme française**
**41, rue Cantagrel**
**F-75631 Paris Cédex 13 (FR)**

(72) Inventeur : **Giancone, Patrick**
**54 avenue de Choisy**
**75013 Paris (FR)**

(74) Mandataire : **Bloch, Gérard et al**
**2, square de l'Avenue du Bois**
**F-75116 Paris (FR)**

## Description

La présente invention a tout d'abord pour objet un procédé de balayage d'une scène à l'aide d'un faisceau, en vue de l'analyse de cette scène par au moins un dispositif récepteur.

La présente invention concerne les systèmes d'imagerie, de veille, de visée, d'analyse dans lesquels un faisceau lumineux est acheminé vers un détecteur au moins. Un miroir intercepte le faisceau lumineux pour permettre, grâce à une rotation appropriée du miroir, de balayer le champ de lecture en gisement par exemple. Au lieu d'un simple détecteur, une barrette constituée de n cellules photosensibles permet l'analyse de s degrés en site. Un tel système a déjà été décrit par exemple dans le brevet français FR-A-2 554 224 de la demanderesse.

Plusieurs techniques de balayage en site sont déjà connues. Ce sont le plus couramment les balayages de type "dent de scie" et "aller-retour". Elles consistent à effectuer un balayage en faisant partir le miroir d'une position $P_1$ extrême (0° par exemple) jusqu'à l'autre position $P_2$ extrême ($\alpha$ degrés) et à balayer entre 0° et $\alpha$ degrés avec une vitesse uniforme.

Dans le cas d'un balayage aller-retour, le temps de balayage retour est égal au temps de balayage aller. De façon plus générale, dans le cas du balayage en dents de scie, entre deux balayages aller, il existe un temps de retour rapide qui est un temps mort. Le temps T représentant la période globale de balayage de l'image est lié à la fréquence $f_r$ de récurrence de l'image par la relation $f_r = \dfrac{1}{T}$.

L'augmentation de la fréquence de récurrence de l'image s'obtient en général en augmentant la vitesse de balayage d'où une diminution de la sensibilité du système.

La présente invention vise à augmenter la fréquence de récurrence de l'image sans diminuer la sensibilité du système.

La présente invention vise en particulier à augmenter la cadence d'acquisition d'une partie, par exemple centrale, de l'image.

A cet effet, elle a pour objet un procédé du type défini ci-dessus, caractérisé par le fait qu'on applique, pendant une période de balayage entre deux positions extrêmes dudit faisceau, deux phases de balayage utile entrecoupées de deux temps morts, chaque temps mort débutant au voisinage de l'une des deux positions extrêmes de balayage jusqu'à une position intermédiaire de retour.

La présente invention a également pour objet un dispositif pour la mise en oeuvre du procédé précédent, de balayage d'une scène à l'aide d'un faisceau, en vue de l'analyse de cette scène par au moins un dispositif récepteur, caractérisé par le fait qu'il comprend des moyens pour appliquer, pendant une période de balayage entre deux positions extrêmes dudit faisceau, deux phases de balayage utile entrecoupées de deux temps morts, chaque temps mort débutant au voisinage de l'une des deux positions extrêmes de balayage jusqu'à une position intermédiaire de retour.

Dans une première variante du système de l'invention, ledit faisceau est un faisceau lumineux, le dispositif récepteur est un dispositif photorécepteur, et il est prévu des moyens réflecteurs pour réfléchir ledit faisceau lumineux, et des moyens pour faire tourner lesdits moyens réflecteurs autour d'un axe, afin de balayer la scène.

Dans une deuxième variante du système de l'invention, pour l'acquisition d'un champ optique, ledit faisceau est un faisceau électronique d'un dispositif vidéo-récepteur et il est prévu des moyens pour balayer le dispositif de réception.

Dans l'une et l'autre variantes, les deux phases de balayage utile ($-\dfrac{\theta}{2}, \dfrac{\alpha}{2}$) et ($\dfrac{\theta}{2}, -\dfrac{\alpha}{2}$) de l'invention autorisent un balayage à fréquence double du centre de l'image lorsque $\dfrac{\theta}{2}$ (resp $-\dfrac{\theta}{2}$) est une position intermédiaire entre 0, position médiane desdits moyens de balayage et $\dfrac{\alpha}{2}$ (resp $-\dfrac{\alpha}{2}$) position extrême.

Selon la première variante de l'invention, les moyens pour réfléchir sont l'un des moyens suivants : prisme, miroir ou tout autre système optique (par exemple diasporamètre).

Selon cette même première variante, le faisceau lumineux est l'un des faisceaux suivants : lumière cohérente, lumière incohérente, infrarouge, ultraviolet, visible.

D'autres avantages et caractéristiques apparaîtront à la lecture de la description suivante illustrée par des dessins.

La figure 1 représente la courbe de la position angulaire du miroir en fonction du temps dans le cas d'un balayage en dent de scie.

La figure 2 représente la courbe de la position angulaire du miroir en fonction du temps dans le cas de l'invention.

La figure 3 représente un diagramme de la position angulaire du miroir dans le cas du balayage en dent de scie.

La figure 4 représente l'accélération conformément au cas de la figure 3.

La figure 5 représente un diagramme de la position angulaire du miroir pendant un retour rapide dans le cas de l'invention.

La figure 6 représente l'accélération dans le cas de la figure 5.

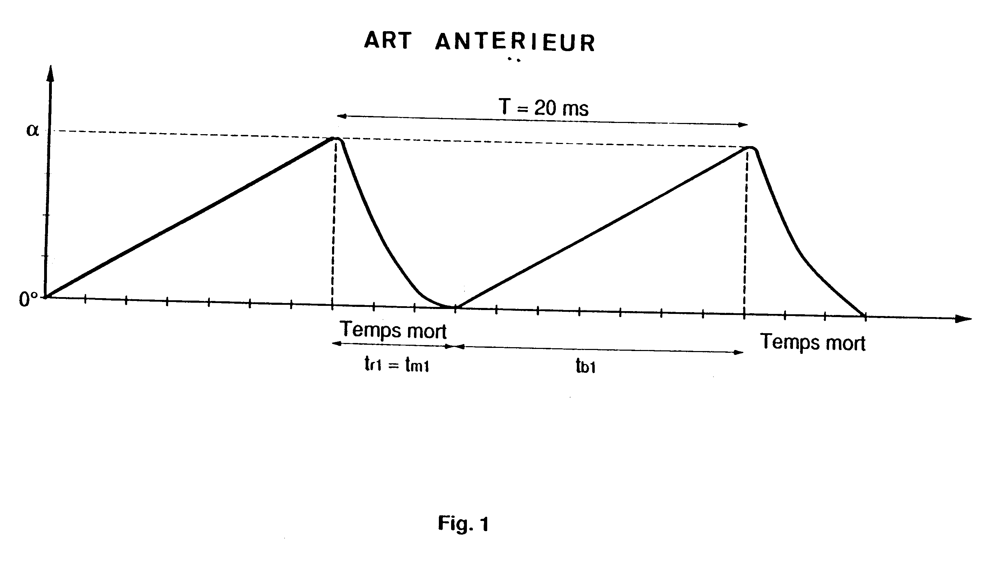

En se référant à la figure 1, dans l'art antérieur, une période T de balayage se compose d'un temps $t_b$ de balayage utile et d'un temps $t_r$ de retour rapide qui est un temps mort. Lors de la période de balayage utile, le miroir part de la position 0° pour, en fin de parcours, avoir la position degrés et ceci pendant le temps $t_{b1}$ pour l'exemple du balayage en dent de scie.

Au contraire, dans l'invention, d'une part, le miroir oscille entre le position $-\frac{\alpha}{2}$ et $\frac{\alpha}{2}$ et, d'autre part, la période de balayage utile est décorrélée de la position départ/arrivée du miroir. En effet, on choisit selon l'invention une grandeur intermédiaire $\frac{\theta}{2}$, pour un angle compris entre 0 et $\frac{\alpha}{2}$ telle que le balayage utile soit initialisé pour la position $\pm\frac{\theta}{2}$ du miroir. Lorsque le balayage est initialisé pour un angle $-\frac{\theta}{2}$, alors le miroir effectue le balayage utile de $-\frac{\theta}{2}$ jusqu'à $+\frac{\alpha}{2}$. Puis, un temps mort $t_{r2}$ court intervient au cours duquel le miroir passe de la position $\frac{\alpha}{2}$ à $+\frac{\theta}{2}$ ; une seconde phase de balayage utile intervient alors au cours de laquelle le miroir passe de la position $\frac{\theta}{2}$ à la position $-\frac{\alpha}{2}$. Enfin, un second temps mort de retour du miroir de la position $-\frac{\alpha}{2}$ à la position $-\frac{\theta}{2}$ succède à ce second balayage. Ainsi, un cycle complet du miroir se compose de deux temps de balayage utile entrecoupés de très courts temps morts.

Un tel choix de balayage, que l'on peut appeler balayage à recouvrement central, présente de très nombreux avantages : pour une même vitesse $V_b$ de balayage que dans le balayage en dents de scie, la partie centrale du champ $\beta \in [-\frac{\theta}{2}, \frac{\theta}{2}]$ est balayée avec une récurrence double $2f_r$. Cette caractéristique est très intéressante dans le cas de la poursuite de cible. En effet, dans ce cas, la ligne de visée est asservie pour que la cible soit au centre du champ. Il est important de comparer deux systèmes de balayage pour une même vitesse de balayage $V_b$. En effet, la sensibilité du système d'imagerie est en général d'autant meilleure que $V_b$ est faible.

L'invention permet donc d'augmenter la cadence d'écartométrie au centre de l'image sans augmenter la vitesse de balayage, et donc de diminuer le temps d'intégration (c'est à dire le temps de passage sur le détecteur photosensible).

Le système de balayage de l'invention permet en outre une réduction de l'effet de "pompage". Un tel effet de "pompage" consiste essentiellement dans la nécessité d'une fréquente correction des coordonnées de la ligne de visée lorsque la cible se déplace rapidement dans le champ et, plus la récurrence de balayage augmente comme dans le système de l'invention, plus l'écart angulaire entre la cible et la ligne de visée se réduit entre deux balayages.

Par contre, le champ balayé vaut, pendant une même période :

$\alpha$ dans le système de balayage classique

$\alpha+\theta$ dans le système de balayage de l'invention.

Le temps mort réservé au retour rapide du miroir est donc moins important dans le cas de l'invention ($t_{m2} < t_{m1}$). Cette contrainte nécessite l'utilisation d'un moteur plus puissant.

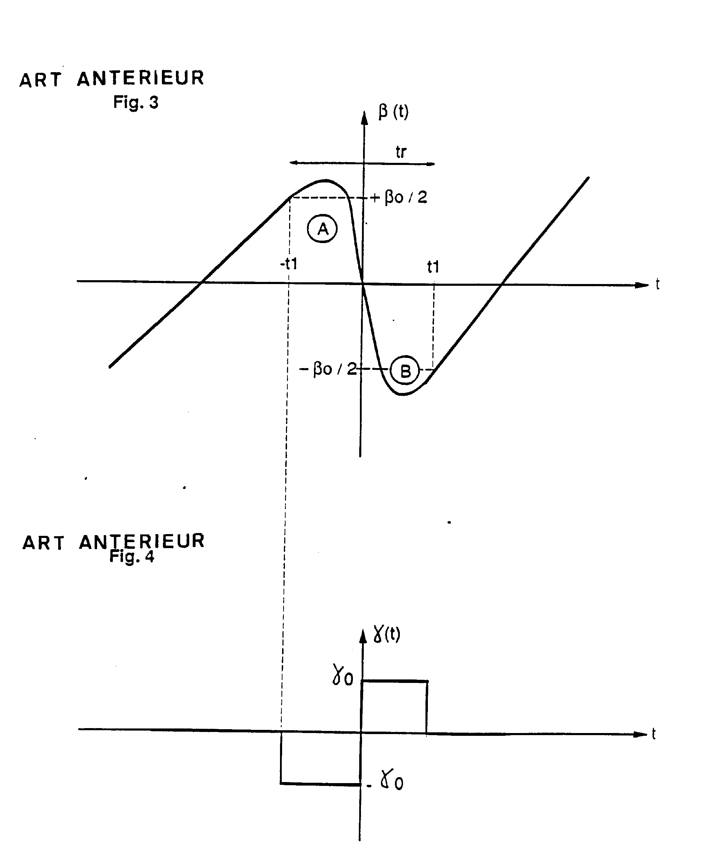

Dans le cas du balayage en dents de scie, les vitesses de balayage valent $V_b$ aussi bien avant qu'après le retour rapide. Pendant le retour de balayage, le mouvement du miroir est décrit par les deux portions de paraboles (A) et (B) représentées sur la figure 3.

L'équation de la parabole (A) s'écrit :

$$P_A = y = -at^2 + bt \qquad \text{avec } a = \frac{1}{2}\gamma_o > 0$$

$$\frac{dP_A}{dt}(t) = -2at + b$$

$$\frac{dP_A}{dt}(-t_1) = V_b$$

où $t_1$ est l'instant où recommence le balayage utile.

$$b = V_b - 2at_1 \qquad (1)$$

3

or

$$2t_1 = t_r$$

d'où

$$b = V_b - at_r \quad (2)$$

$$P_A(-t_1) = \frac{\beta_o}{2}$$

l'ordonnée du miroir est égale à $\frac{\beta_o}{2}$ au moment du début du retour rapide dans le cas du balayage classique, d'où :

$$a = -\frac{1}{t^2_1} - (\frac{\beta_o}{2} + bt_1) \quad (3)$$

En combinant les relations (1) et (3), on trouve :

$$a = \frac{1}{t^2_1}(\frac{\beta_o}{2} + V_b t_1) \quad (4)$$

Or

$$2t_1 = t_r \text{ et } a = \frac{1}{2}\gamma_o$$

On en déduit que $\gamma_o$, l'accélération à laquelle est soumis le miroir, s'exprime par la relation suivante :

$$\gamma_o = 2a = 4\frac{\beta_o + V_b t_r}{t^2 r} \quad (5)$$

Et si J est le moment d'inertie de l'équipage mobile, le couple minimum utile $\Gamma_1$ s'écrit :

$$\Gamma_1 = 4J\frac{\beta_o + V_b t_r}{t^2 r} \quad (6)$$

où $t_r = t_{m1}$ selon la figure 1 et $\beta_o = \alpha$.

Dans le cas des retours rapides selon l'invention, le couple moteur est extrêmement raisonnable ainsi qu'il apparait dans la description ci-dessous du mouvement du miroir.

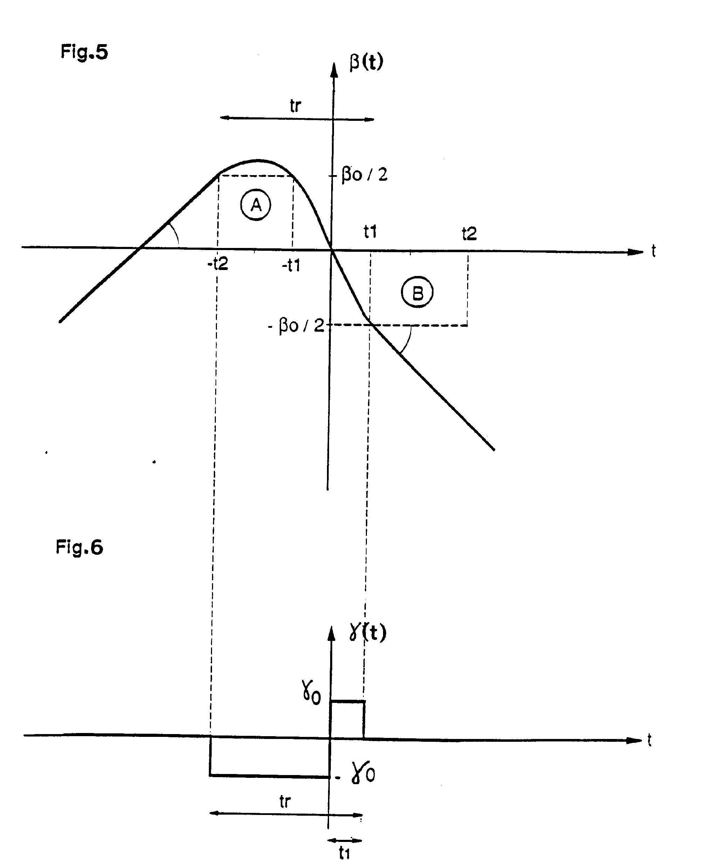

La courbe $\beta$ (t) (figure 5) représente la position du miroir tandis que $\gamma$ (t) (figure 6) représente son accélération. Le temps $t_r$ de retour est compris entre $- t_2$ et $t_1$. Comme le mouvement est symétrique, c'est pour la vitesse $V_b = \pm\frac{\beta_o}{2}$ que le balayage redevient utile.

Ainsi, la figure 5 représente le mouvement optimal du miroir (à temps de retour minimum) dans le cas où $\gamma$ (t) est limité à la valeur $\gamma_o$ constante par la motorisation.

La vitesse de balayage est $+V_b$ pour $t = -t_2$ avant le retour rapide et $-V_b$ après le retour rapide. Ce mouvement du miroir, lors du retour rapide, est décrit par la portion (A) de parabole. La vitesse ne s'annule pas au temps $t_1$ de reprise du balayage utile, mais au contraire se trouve à la valeur $V_B$. L'équation de la parabole (A) sur $(-t_2,0)$ s'écrit :

$$P_A : y = -at^2 + bt$$
$$a = \frac{1}{2}\gamma_o > 0$$

$$\frac{dP_A}{dt}(t) = -2at + b$$

$$\frac{dP_A}{dt}(-t_2) = V_b$$

$$2a t_2 + b = V_b \quad (1) \text{ bis}$$

$$\frac{dP_A}{dt}(-t_1) = -V_b$$

$$2a t_1 + b = -V_b \quad (2) \text{ bis}$$

sachant que

$$t_r = t_1 + t_2 \quad (3) \text{ bis}$$

d'où les trois relations :

$$t_2 = \frac{V_b - b}{2a}$$

$$t_1 = \frac{-V_b - b}{2a}$$

$$t_r = t_1 + t_2$$

d'où

$$\frac{V_b - b}{2a} + \frac{-V_b - b}{2a} = t_r$$

$$- \frac{2b}{2a} = t_r$$

$$b = -at_r \quad (4) \text{ bis}$$

$$p_A(-t_2) = \frac{\beta_o}{2}$$

$$-at_2^2 - bt_2^2 = \frac{\beta_o}{2} \quad (5) \text{ bis)}$$

$$P_A(-t_1) = \frac{\beta_o}{2}$$

$$-at_1^2 - bt_1 = \frac{\beta_o}{2} \quad (6) \text{ bis}$$

$$(5 \text{ bis}) \Leftrightarrow at_2^2 = -bt_2 - \frac{\beta_o}{2}$$

$$a = \frac{1}{t_2^2}\left(-bt_2 - \frac{\beta_o}{2}\right)$$

or

$$t_2 = \frac{V_b - b}{2a}$$

d'où

$$(5 \text{ bis}) \quad a = \frac{b^2 - V_b^{\,2}}{2\beta_o}$$

En combinant 4 bis et 7 bis, on obtient

$$t_r^2 a^2 - 2\beta_o a - V_b^2 = 0 \quad (8 \text{ bis})$$

ce qui donne les deux solutions dont l'une correspond à a positif

$$a = \frac{\beta_o + \sqrt{\beta_o^2 \, V_b^2}}{t^2 r}$$

or,

$$a = \frac{1}{2}\gamma_o$$

d'où

$$\gamma_o = 2a = 2\frac{\beta_o + \sqrt{\beta_o^2 + t_r^2 V_b^2}}{t_r^2}$$

si J est le moment d'inertie de l'équipage mobile de couple minimum utile $\Gamma_2$ s'écrit

$$\Gamma_2 = 2J\frac{\beta_o + \sqrt{\beta_o^2 + t_r^2 V_b^2}}{t_r^2} \quad (11) \text{ bis}$$

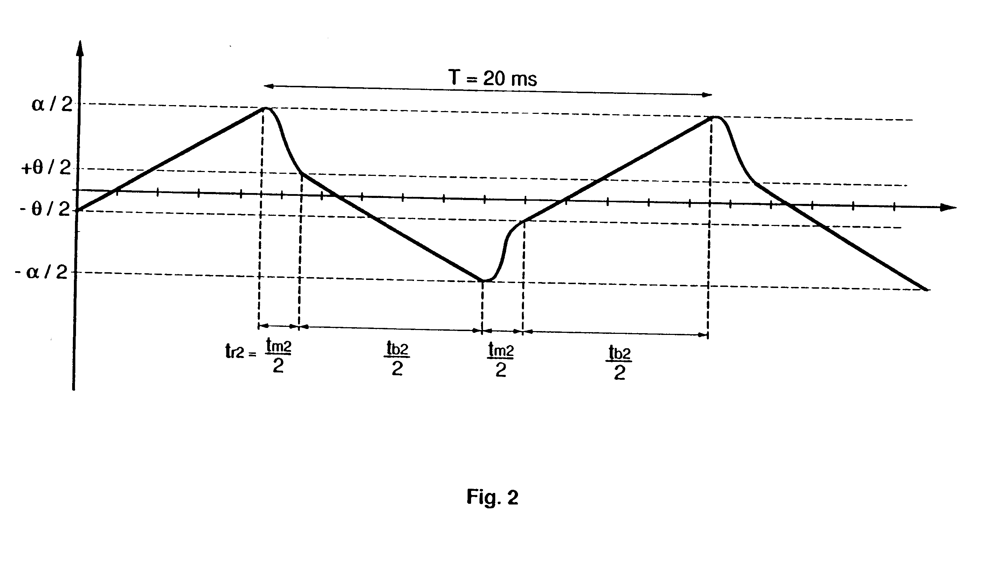

en reprenant les anotations temporelles de la figure 2, $_2$ s'écrit :

$$\Gamma_2 = 4J\frac{\alpha - \theta + \sqrt{(\alpha - \theta)^2 + V_b^2 t_m^2}}{t_{m_2^2}} \quad (12) \text{ bis}$$

si on compare dans un cas semblable (par exemple cas du miroir) les accélérations minimales utiles dans le cas classique (fig. 1) et la présente invention (fig. 2), pour un recouvrement de 1/8 du champ total, on trouve :

$$\frac{\gamma_2}{\gamma_1} = \frac{\Gamma_2}{\Gamma_1} \simeq 2{,}5$$

On s'affranchit de cette contrainte de couple minimum utile par l'emploi d'un moteur plus puissant dans un ordre de grandeur raisonnable.

La description ci-dessus concerne l'exemple du balayage d'un miroir mais il est bien évident que le système de balayage de l'invention s'appliquerait de la même manière au balayage d'un prisme, d'un déflexeur optique ou tout système optique visant à transmettre une image d'un objet.

La présente invention s'applique également aux dispositifs d'acquisition de champ, par exemple aux dispositifs vidéorécepteurs, caméras. En effet, de tels systèmes analysent un objet par balayage du champ du dispositif d'enregistrement au moyen d'un faisceau électronique. Le système de balayage à recouvrement de l'invention permet d'acquérir l'image complète à la fréquence $f_r$ donnée tout en obtenant une cadence double

$2f_r$ pour la partie centrale de cette même image.

Le tableau suivant résume les cadences d'écartométrie des solutions selon le balayage en "dents de scie" (art antérieur) et selon l'invention (balayage à recouvrement central ou BRC).

| Balayage | Cadence d'écartométrie au centre du champ | Cadence d'écartométrie en bordure du champ |
|---|---|---|
| Dents de scie | $\dfrac{1}{\alpha\,V_b}$ | $\dfrac{1}{\alpha\,V_b}$ |
| BRC | $2 \times \dfrac{1}{(\alpha+\theta)\,V_b}$ | $\dfrac{1}{(\alpha+\theta)\,V_b}$ |

Comme $\theta$ est très petit devant $\alpha$, au centre du champ, la cadence est voisine de $\dfrac{2}{\alpha V_b}$ tandis qu'en bordure du champ la cadence est voisine de $\dfrac{1}{\alpha V_b}$ dans la réalisation de l'invention.

## Revendications

1. Procédé de balayage d'une scène à l'aide d'un faisceau, en vue de l'analyse de cette scène par au moins un dispositif récepteur, caractérisé par le fait qu'on applique, pendant une période (T) de balayage entre deux positions extrêmes ( $-\dfrac{\alpha}{2}$, $+\dfrac{\alpha}{2}$) dudit faisceau, deux phases de balayage utile entrecoupées de deux temps morts de retour ($t_m$), les deux temps morts débutant au voisinage respectivement des deux positions extrêmes de balayage ($\pm\dfrac{\alpha}{2}$) jusqu'à deux positions intermédiaires respectives ($\pm\dfrac{\theta}{2}$).

2. Système de balayage pour la mise en oeuvre du procédé selon la revendication 1 de balayage d'une scène à l'aide d'un faisceau, en vue de l'analyse de cette scène par au moins un dispositif récepteur, caractérisé par le fait qu'il comprend des moyens pour appliquer, pendant une période (T) de balayage entre deux positions extrêmes ( $-\dfrac{\alpha}{2}$, $\dfrac{\alpha}{2}$) dudit faisceau, deux phases de balayage utile entrecoupées de deux temps morts de retour ($t_m$), les deux temps morts débutant au voisinage respectivement des deux positions extrêmes de balayage ($\pm\dfrac{\alpha}{2}$) jusqu'à deux positions intermédiaires respectives ($\pm\dfrac{\theta}{2}$).

3. Système selon la revendication 2, dans lequel ledit faisceau est un faisceau lumineux, le dispositif récepteur est un dispositif photorécepteur, et il est prévu des moyens réflecteurs pour réfléchir ledit faisceau lumineux, et des moyens pour faire tourner lesdits moyens réflecteurs autour d'un axe, afin de balayer la scène.

4. Système selon la revendication 2, pour acquisition de champ optique, dans lequel ledit faisceau est un faisceau électronique d'un dispositif vidéo-récepteur et il est prévu des moyens pour balayer le dispositif de réception.

5. Système selon l'une des revendications 2 à 4, caractérisé par le fait que les deux phases de balayage utile $(-\frac{\theta}{2}, \frac{\alpha}{2})$ et $(\frac{\theta}{2}, -\frac{\alpha}{2})$ autorisant un balayage à fréquence double du centre de l'image lorsque $(\frac{\theta}{2})$ (resp $-\frac{\theta}{2}$) est une position intermédiaire entre 0, position médiane desdits moyens de balayage et $(\frac{\alpha}{2})$ (resp $-\frac{\alpha}{2}$) position extrême.

6. Système selon l'une des revendications 3 ou 5, caractérisé par le fait que lesdits moyens pour réfléchir sont l'un des moyens suivants : prisme, miroir, ou tout autre système optique (diasporamètre).

7. Système selon l'une des revendications 3, 5 ou 6, caractérisé par le fait que le faisceau lumineux est l'un des faisceaux suivants : lumière cohérente, lumière incohérente, infrarouge, ultra violette, visible.

**Patentansprüche**

1. Verfahren zur Abtastung einer Szenerie mittels eines Strahlenbündels zum Zweck der Analyse dieser Szenerie unter Verwendung mindestens einer Empfangsvorrichtung, dadurch gekennzeichnet, daß man während einer Periode (T) der Abtastung zwischen zwei Extrempositionen ($-\frac{\alpha}{2}$, $+\frac{\alpha}{2}$) dieses Bündels zwei Nutzabtastungsphasen anlegt, die durch zwei Rücklauf-Leerzeiten ($t_m$) unterbrochen sind, wobei diese Leerzeiten jeweils in der Nähe der beiden Extrempositionen der Abtastung ($\pm\frac{\alpha}{2}$) bis zu jeweils zwei Zwischenpositionen ($\pm\frac{\theta}{2}$) beginnen.

2. Abtastungssystem zur Durchführung des Verfahrens nach Anspruch 1 zur Abtastung einer Szenerie mittels eines Strahlenbündels zum Zweck der Analyse dieser Szenerie unter Verwendung mindestens einer Empfangsvorrichtung, dadurch gekennzeichnet, daß es Mittel umfaßt, um während einer Periode (T) der Abtastung zwischen zwei Extrempositionen ($-\frac{\alpha}{2}, \frac{\alpha}{2}$) dieses Bündels zwei Nutzabtastungsphasen anzulegen, die durch zwei Rücklauf-Leerzeiten ($t_m$) unterbrochen sind, wobei diese Leerzeiten jeweils in der Nähe der beiden Extrempositionen der Abtastung ($\pm\frac{\alpha}{2}$) bis zu jeweils zwei Zwischenpositionen ($\pm\frac{\theta}{2}$) beginnen.

3. System nach Anspruch 2, bei dem dieses Strahlenbündel ein Lichtbündel ist und die Empfangsvorrichtung eine Photoempfangsvorrichtung ist, wobei Reflektormittel zum Reflektieren dieses Lichtbündels und Mittel vorgesehen sind, um diese Reflektoreinrichtung um eine Achse zu drehen, um die Szenerie abzutasten.

4. System nach Anspruch 2 zur Erfassung des optischen Feldes, bei dem dieses Strahlenbündel ein Elektronenstrahlenbündel einer Videoempfangsvorrichtung ist, wobei Mittel zum Abtasten der Empfangsvorrichtung vorgesehen sind.

5. System nach einem der Ansprüche 2 bis 4, dadurch gekennzeichnet, daß die beiden Nutzabtastungsphasen ($-\frac{\theta}{2}, \frac{\alpha}{2}$) und ($\frac{\theta}{2}, -\frac{\alpha}{2}$) eine Abtastung des Zentrums des Bildes mit doppelter Frequenz ermöglicht, wenn ($\frac{\theta}{2}$) (bzw.$-\frac{\theta}{2}$) eine Zwischenposition zwischen 0, der Mittelposition dieser beiden Abtasteinrichtungen und der ($\frac{\alpha}{2}$) (bzw. $-\frac{\alpha}{2}$)-Extremposition ist.

6. System nach einem der Ansprüche 3 oder 5, dadurch gekennzeichnet, daß die Mittel zum Reflektieren eine der folgenden Einrichtungen sind: Prisma, Spiegel, oder jedes andere optische System ( Diasporameter).

7. System nach einem der Ansprüche 3, 5 oder 6, dadurch gekennzeichnet, daß das Lichtbündel eines der folgenden Bündel ist: kohärentes Licht, inkohärentes Licht, Infrarot, Ultraviolett, sichtbar.

**Claims**

1. Method for scanning a scene by means of a beam, with a view to the analysis of this scene by at least one receiver device, characterized by the fact that during a scanning period (T) between two extreme positions ( $-\frac{\alpha}{2}$, $+\frac{\alpha}{2}$ ) of said beam, one applies two useful scanning phases interrupted by two return idle periods ($t_m$), the two idle periods beginning in the vicinity respectively of the two extreme scanning positions ($\pm\frac{\alpha}{2}$) as far as two respective intermediate positions ($\pm\frac{\theta}{2}$).

2. Scanning system for carrying out the method according to Claim 1 for scanning a scene by means of a beam, with a view to the analysis of this scene by at least one receiver device, characterized by the fact that it comprises means for applying, during a scanning period (T) between two extreme positions ( $-\frac{\alpha}{2}$, $+\frac{\alpha}{2}$ ) of said beam, two useful scanning phases interrupted by two return idle periods ($t_m$), the two idle periods beginning in the vicinity respectively of two extreme scanning positions ($\pm\frac{\alpha}{2}$) as far as two respective intermediate positions ($\pm\frac{\theta}{2}$).

3. System according to Claim 2, in which said beam is a light beam, the receiver device is a photo-receiver device and reflector means are provided for reflecting said light beam and means for rotating said reflector means about an axis, in order to scan the scene.

4. System according to Claim 2, for the acquisition of an optical field, in which said beam is an electronic beam of a video-receiver device and means are provided for scanning the reception device.

5. System according to one of Claims 2 to 4, characterized by the fact that the two useful scanning phases ( $-\frac{\theta}{2}$, $\frac{\alpha}{2}$ ) and ( $\frac{\theta}{2}$, $-\frac{\alpha}{2}$ ) allowing scanning at double frequency of the centre of the image when ($\frac{\theta}{2}$) (resp. $-\frac{\theta}{2}$) is an intermediate position between 0, a median position of said scanning means and ($\frac{\theta}{2}$) (resp. $-\frac{\alpha}{2}$) extreme position.

6. System according to one of Claims 3 or 5, characterized by the fact that said means for reflecting are one of the following means: prism, mirror, or any other optical system (diasporameter).

7. System according to one of Claims 3, 5 or 6, characterized by the fact that the light beam is one of the following beams: coherent light, incoherent light, infrared, ultraviolet, visible light.

# ART ANTERIEUR

**Fig. 1**

$T = 20$ ms

$\alpha/2$

$+\theta/2$

$-\theta/2$

$-\alpha/2$

$tr2 = \dfrac{tm2}{2}$  $\dfrac{tb2}{2}$  $\dfrac{tm2}{2}$  $\dfrac{tb2}{2}$

Fig. 2

EP 0 406 073 B1

ART ANTERIEUR
Fig. 3

ART ANTERIEUR
Fig. 4

Fig.5

Fig.6